# EUROPEAN PATENT APPLICATION

(11) **EP 4 850 987 A1**
(43) Date of publication of application: **09.12.2026**
(21) Application number: 25180468.8
(22) Date of filing: 03.06.2025
(51) Int. Cl.: B60R 16/02, F16L 3/00

(54) **A DEVICE FOR PROVIDING AN INTERFACE FOR CONNECTING CABLING OR TUBING TO A VEHICLE**

(71) Applicant: Volvo Truck Corporation, 405 08 Göteborg (SE)
(72) Inventor: RICCETTI, Tony, PORCIEU AMBLAGNIEU (FR)
(74) Representative: Ström & Gulliksson AB

(57) **Abstract**

Present disclosure relates to a device for providing an interface for connecting at least one of cabling or tubing to a vehicle, the device comprising a main member comprising a device interface, one or more mounting member releasably mounted to the device interface, wherein at least one mounting member comprises a connection interface for accommodating connection of at least one cable or tube to the vehicle, and wherein the device interface is configured to modularly receive a plurality of mounting members.

## Description

### TECHNICAL FIELD

The disclosure relates generally to accommodating connection of cabling or tubing to a vehicle. In particular aspects, the disclosure relates to a device for providing an interface for connecting cabling or tubing to a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Existing vehicles, such as trucks, trailers, and semi-trailers, require interfaces for connecting various cabling and tubing. These connections may be of importance for electrical systems, pneumatic systems, hydraulic systems, and other vehicle functions. Current connection interfaces often employ designs offering limited adaptability or that are bulky and complex due to having to accommodate for a large number of potential connections. This presents several drawbacks in various scenarios.

Fixed interfaces may be difficult to integrate with new vehicle models or configurations, requiring modifications to the chassis or body. Furthermore, prior art solutions lack versatility in addressing the diverse needs of bodybuilders and after-market facilities. These entities frequently customize vehicles to meet specific customer demands, which may involve adding or reconfiguring connection points for specialized equipment. Such customizations are often complex and time-consuming, requiring specialized tools and expertise.

Another drawback of current connection interfaces is their limited ability to accommodate repairs and maintenance. When a connection point becomes damaged or fails, the entire interface may need to be replaced, even if only a small section is affected. This results in unnecessary expenses and vehicle downtime. Moreover, the lack of standardization in connection layouts can make it difficult to source replacement parts, further complicating the repair process.

### SUMMARY

According to a first aspect of the disclosure, a device for providing an interface for connecting at least one of cabling or tubing to a vehicle. The device comprises a main member comprising a device interface, and one or more mounting member releasably mounted to the device interface, wherein at least one mounting member comprises a connection interface for accommodating connection of at least one cable or tube to the vehicle, and wherein the device interface is configured to modularly receive a plurality of mounting members.

The first aspect of the disclosure may seek to improve flexibility and adaptability relative to existing connection interfaces. A technical benefit may include greater versatility and ease of reconfiguring connection interfaces allowing for reduced costs and increased efficiency.

Optionally in some examples, including in at least one preferred example, at least one mounting member of the one or more mounting member may be provided as a plate member. A technical benefit may include a more cost-efficient and space-efficient device.

Optionally in some examples, including in at least one preferred example, at least one mounting member of the one or more mounting member may be formed by extrusion. A technical benefit may include a more cost-efficient device which is less complex to manufacture.

Optionally in some examples, including in at least one preferred example, the main member may comprise a mounting interface comprising one or more mounting apertures for receiving a mounting element for mounting the device to the vehicle. A technical benefit may include secure attachment of the device to the vehicle.

Optionally in some examples, including in at least one preferred example, the connection interface may comprise one or more routing apertures for routing at least one cable or tube to the vehicle through the mounting member. A technical benefit may include organized and protected cable or tube routing which may be modularly adapted.

Optionally in some examples, including in at least one preferred example, the connection interface may comprise one or more clip mounting portions for mounting of a mounting clip for routing of one or more cable or tube or connector mounting portions for mounting of a tube connector or a cable connector. A technical benefit may include improved cable or tube management and accommodation of adaptive connections for tubing or cabling.

Optionally in some examples, including in at least one preferred example, at least one of the one or more clip mounting portions may be provided as a hole extending through the mounting member. A technical benefit may include easy and adaptable mounting of mounting clips.

Optionally in some examples, including in at least one preferred example, the main member may be formed by a profile element. A technical benefit may include a more cost-efficient and space-efficient device.

Optionally in some examples, including in at least one preferred example, the main member may formed by extrusion. A technical benefit may include a more cost-efficient manufacturing.

Optionally in some examples, including in at least one preferred example, the device interface may comprise one or more mounting portion for mounting at least one of the mounting members. A technical benefit may include simplified mounting and secure positioning of the mounting members.

Optionally in some examples, including in at least one preferred example, the device interface may comprise a first mounting portion for mounting one or more first mounting member in a first orientation and a second mounting portion for mounting one or more second mounting member in a second orientation different from the first orientation such that the one or more second mounting member extends at an angle relative to the one or more first mounting member. A technical benefit may include a device allowing for routing and connecting of tubing or cabling from different directions, further improving the adaptability of the device.

Optionally in some examples, including in at least one preferred example, the device interface may comprise a third mounting portion for mounting one or more third mounting member in a third orientation different from the first and second orientation such that the one or more third mounting member extends at an angle relative to the one or more first and second mounting member. A technical benefit may include a device allowing for routing and connecting of tubing or cabling from even more different directions, further improving the adaptability of the device.

Optionally in some examples, including in at least one preferred example, at least one of one or more mounting portions may comprise a mounting rail extending along the main member, and wherein the at least one mounting member comprises a rail engaging portion adapted to slidably engage the mounting rail for positioning the mounting member relative to the main member. A technical benefit may include a simple mounting and adjustable positioning of the mounting members.

Optionally in some examples, including in at least one preferred example, the at least one mounting rail may be configured to accommodate mounting of a plurality of mounting members along said mounting rail. A technical benefit may include achieving a space-efficient and non-complex manner of providing support for various tubing and cabling.

Optionally in some examples, including in at least one preferred example, the device may further comprise a retention arrangement configured to form a releasable snap-fit connection between the mounting member and the main member, the retention arrangement comprising a retaining recess provided on one of the mounting member and the main member and a retaining flange provided on the other of the mounting member and configured to releasably engage the retaining recess for retaining the mounting member to the main member. A technical benefit may include a simple and secure mounting of mounting members. Another technical benefit may include that the mounting may be achieved without use of tools.

Optionally in some examples, including in at least one preferred example, the slidable engagement between the rail engaging portion and the mounting rail may be configured to accommodate for pivoting of the mounting member relative the mounting rail such that the mounting member is pivotable to a position where the retaining recess and the retaining flange are brought into engagement for retaining the mounting member to the main member. A technical benefit may include easy installation and removal of mounting members.

Optionally in some examples, including in at least one preferred example, the main member may be formed by a profile element, wherein the device interface may comprise a first mounting portion for mounting one or more first mounting member in a first orientation and a second mounting portion for mounting one or more second mounting member in a second orientation different from the first orientation such that the one or more second mounting member extends at an angle relative to the one or more first mounting member, wherein the device interface may further comprise a third mounting portion for mounting one or more third mounting member in a third orientation different from the first and second orientation such that the one or more third mounting member extends at an angle relative to the one or more first and second mounting member, wherein each of the mounting portions may comprise a mounting rail extending along the main member, and wherein each mounting member may comprise a rail engaging portion adapted to slidably engage the mounting rail for positioning the mounting member relative to the main member, and wherein each mounting rail is configured to accommodate mounting of a plurality mounting members along said mounting rail. A technical benefit may include a versatile and configurable connection interface system.

According to a second aspect of the present disclosure an interface system for a vehicle is provided, the interface system comprises a device of any of the examples described herein and a support member for mounting the device to a frame of the vehicle.

The second aspect of the disclosure may seek to improve flexibility and adaptability relative to existing connection interfaces. A technical benefit may include greater versatility and ease of reconfiguring connection interfaces allowing for reduced costs and increased efficiency.

Optionally in some examples, including in at least one preferred example, the support member may be substantially arc-shaped. A technical benefit may include an improved space utilization and rigid connection to the vehicle.

According to a third aspect of the disclosure a vehicle is provided. The vehicle comprises the interface system of any of the examples described herein.

The third aspect of the disclosure may seek to improve flexibility and adaptability relative to existing connection interfaces A technical benefit may include greater versatility and ease of reconfiguring connection interfaces allowing for reduced costs and increased efficiency.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle depicted according to an example, depicted in a perspective view.
**FIG. 2** is an exemplary interface system for a vehicle according to an example, depicted in a perspective view.
**FIG. 3A** is an exemplary device for an interface system according to an example, depicted in a front perspective view.
**FIG. 3B** depicts the device of **FIG. 3A** according to an example in a rear perspective view.
**FIG. 3C** depicts the device of **FIG. 3A-B** in further detail according to an example.
**FIG. 4A** depicts a main member of the device of **FIG. 3A-B** according to an example in a rear perspective view.
**FIG. 4B** depicts the main member of **FIG. 4A** according to an example in a front perspective view.
**FIG. 5** depicts a mounting member of the device according to an example in a perspective view.
FIG. 6A-E depicts a mounting member according to different examples in a perspective view.

### DETAILED DESCRIPTION

The detailed description set forth below provides information and examples of the disclosed technology with sufficient detail to enable those skilled in the art to practice the disclosure.

The present disclosure may seek to address the limitations of existing connection interface designs for vehicles. These existing solutions may present challenges related to adaptability, customization, and maintenance. The disclosure describes a modular connection interface system, which may provide a solution to these challenges by employing a system where various connection points can be easily added, removed, or reconfigured to accommodate different cabling and tubing requirements.

The present disclosure may aim to achieve simplified customization by bodybuilders and after-market facilities, and convenient repairs and maintenance.

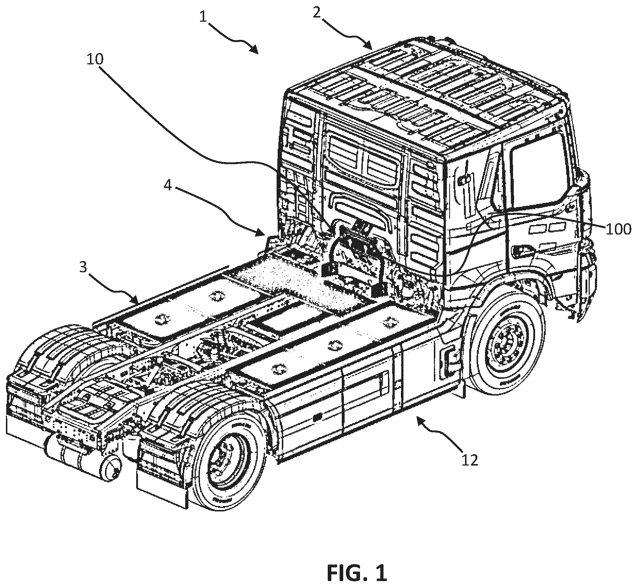

Referring to **FIG. 1****,** an exemplary vehicle **1** is depicted in a perspective view. The vehicle **1,** in this example, is a truck, but it could also be a trailer, a semi-trailer, or any other type of vehicle requiring connection interfaces.

The vehicle **1** may comprise a cab **2.** The cab **2** may house the driver and vehicle controls. The vehicle **1** may further comprise a chassis **3,** The chassis **3** may comprise a frame **12.** The frame **12** may provide structural support for the components of the vehicle **1.**

The vehicle **1** may further comprise a cab suspension **4.** The cab **2** may be mounted to the cab suspension **4.** The cab suspension **4** may in turn be mounted to the frame **3.** The frame **12** may support the cab **2.**

The cab suspension **4** may be configured to isolate the cab **2** from vibrations and shocks from the frame **12** during operation.

According to the present disclosure, an interface system **10** is provided. The interface system **10** comprises a device **100** for providing an interface for connecting at least one of cabling or tubing to the vehicle **1.** The interface system **10** further comprises a support member **11** for mounting the device **100** to the frame of the vehicle **12.**

The interface system **10** may thus be mounted to the frame **12.** In one example, the interface system **10** may be mounted adjacent to the cab suspension **4.** In alternative examples, the interface system may be mounted to the frame **12** by means of attaching of the support member **11** to the frame **12** or the cab suspension **4,** or both the frame **12** and the cab suspension **4,** depending on the specific vehicle configuration and connection requirements.

The interface system **10** may be positioned to facilitate connections between the vehicle **1** and external systems or components. The location of the interface system **10** on the frame **12** may allow for convenient access to essential vehicle systems, such as electrical wiring, pneumatic lines, and hydraulic hoses.

Hence, tubing and cabling may herein relate to any type of conventional connections relating to power, data, fluid etc. The term tubing, as used herein, may encompass pneumatic or hydraulic lines, hoses, and other conduits used to transport fluids or gases. The term cabling as used herein, may encompass any electrical wiring used for data transmission, power distribution, and other electrical functions.

The interface system **10,** and the device **100** it incorporates, may for example be intended to accommodate connection of tubing and/or cabling to the cab **2** of the vehicle **1.** For example, the interface system **10** may serve as a point for routing electrical wiring from the cab **2** to various components located on the chassis or body of the vehicle **1.** Additionally or alternatively, the interface system **10** may provide connections for pneumatic lines used to control air brakes, suspension systems, or other cab-related functions.

Advantageously, the interface system **10** may be configured to form an interface between a vehicle **1** and a trailer for connecting tubing and/or cabling connected to the trailer to the vehicle **1.** According to such an example, the interface system **10** may be arranged at a rear section of the cab **2** to facilitate connection of tubing and/or cabling to the vehicle **1.**

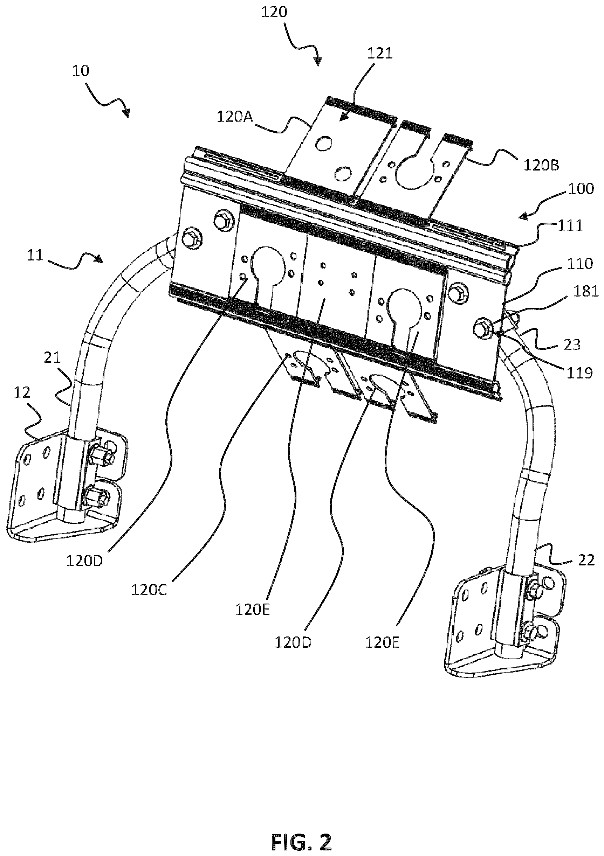

**FIG. 2** depicts the interface system **10** according to one example in further detail, The interface system **10** is shown in conjunction with the support member **11,** which facilitates mounting the interface system **10** to the vehicle frame **12.**

The interface system **10** comprises the device **100.**

Accordingly, a device **100** is provided for providing an interface for connecting at least one of cabling or tubing to the vehicle **1.** The device **100** comprises a main member **110.** The main member **110** comprises a device interface **111.** The device **100** further comprises one or more mounting member **120.** The one or more mounting member **120** is releasably mounted to the device interface **111.**

At least one mounting member **120** comprises a connection interface **121** for accommodating connection of at least one cable or tube to the vehicle **1.** The device interface **111** is configured to modularly receive a plurality of mounting members **120.**

This modular design allows for flexible configuration and easy adaptation to different connection requirements.

Accommodating connection of at least one cable or tube to the vehicle **1** may herein refer to that the mounting member **120,** e.g. the connection interface **121** of the mounting member **120,** may provide an interface for securing a cable or tube to the device **100,** may provide for routing the cable or tube to connect with the vehicle **1** and/or may provide an interface for mounting of a connector for connection to the at least one cable or tube.

The device interface **111** being configured to modularly receive a plurality of mounting members **120** may herein refer to that the device interface **111** may accommodate releasable mounting of more than one mounting member **120.** Hence, the device **100** does not form a fixed structure. Instead the device **100** may be configured such that mounting members **120** can be added, removed, or rearranged in various positions relative to the device interface **111.**

It may be envisioned that the support member **11** may be attached to the frame using various fastening methods, such as bolts or screws, depending on the specific vehicle design and mounting requirements. The support member **11** allows for the device **100** to be rigidly mounted to withstand the stresses and vibrations encountered during vehicle operation.

The support member **11** may be arranged in a variety of configurations. For instance, the support member **11** may be positioned vertically along the vehicle frame, horizontally across the frame, or at an angle to the frame, depending on the available space and the desired connection layout.

In the depicted example, the support member **11** is substantially arc-shaped. This arc-shaped design may be particularly advantageous for mounting the device **100** at a distance, e.g. vertical distance, from the frame **12** to enable easier connection of tubing or cabling to the vehicle **1.**

Referencing **FIG. 2****,** the support member **11** may comprise a horizontally extending portion **23.** The device **100** may be mounted to the horizontally extending portion **23.** The support member **11** may comprise a first vertically extending portion **21** configured to be attached to a first portion of the frame **12.** The support member **11** may comprise a second vertically extending portion **22** configured to be attached to a second portion of the frame **12.** The horizontally extending portion **23** may interconnect the first vertically extending portion **21** and the second vertically extending portion **22.**

The first and second portion of the frame **12** may be formed by a first and second frame element of the frame **12** extending parallel to each other and at a distance from each other. The frame elements may extend along the vehicle **1.**

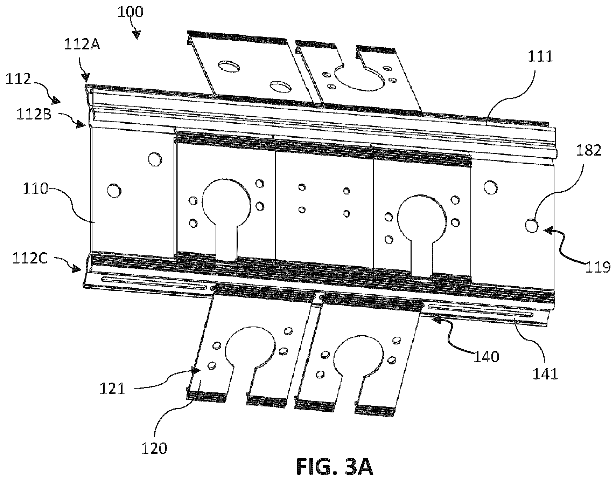

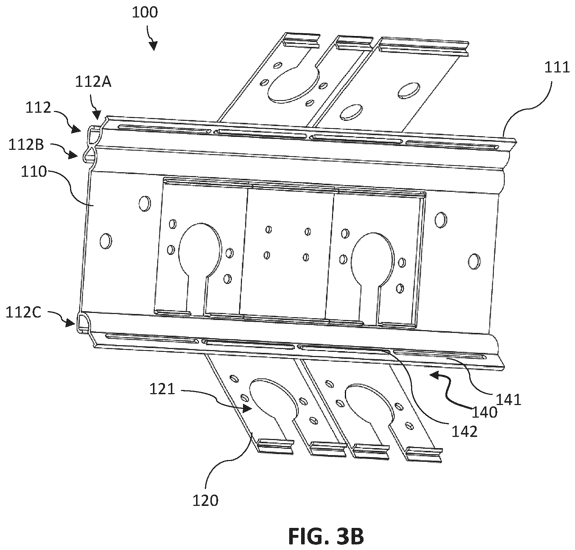

**FIG. 3A-B** depicts perspective views of the device **100** according to an example.

As depicted in **FIG. 3A-B,** at least one mounting member **120** may be provided as a plate member. Advantageously, each of the one or more mounting members **120** may be provided as a plate member. As the skilled person is aware, a plate member may refer to a generally flat, planar member. Plate members may offer a simple manner of accommodating various connection interfaces **121.** As will be explained in further detail with reference to the remaining figures, plate members may be readily customized with different drilling patterns, cutouts, or mounting features etc. to support a wide range of cabling and tubing connections or routing of cabling or tubing. The use of plate members may allow for easy adaptation to different vehicle configurations and connection requirements.

In one example, at least one mounting member **120** may be formed by extrusion. Advantageously, each of the one or more mounting members **120** may be formed by extrusion. In one example, a plurality of mounting members **120** may be provided. According to such an example, the mounting members **120** may be formed by cutting of a profile element into sections. Each section may form a mounting member **120.** The profile element may be formed by extrusion.

In one example, at least one mounting member **120** may be in metal such as steel or aluminum. It may be envisioned that each of the one or more mounting members **120** may be in metal such as steel or aluminum.

Further referencing **FIG. 3A-B,** the main member **110** may be in metal such as steel or aluminum.

In one example, the main member **110** may be formed by a profile element. The main member **110** may thus be formed by an elongated element with a uniform cross-section.

In one example, the main member **110** may be formed by extrusion. It may for example be envisioned that the main member **110** is formed by an extruded profile element.

The device **100** may be mounted to the vehicle **1,** e.g. the frame **12,** by means of at least one of the one or more mounting members **120** comprising an interface for mounting of the device **100** to the vehicle **1** and/or the main member **110** comprising an interface for mounting of the device **100** to the vehicle **1.**

In the depicted example, the main member **110** may comprise a mounting interface **119.** The mounting interface **119** may comprise one or more mounting apertures **182** for receiving a mounting element **181.** These mounting elements are used for mounting the device **100** to the vehicle **1.** The mounting element **181** may be any type of conventional mounting element **181.** The mounting element **181** may for example be selected from a variety of readily available fasteners, such as screws, bolts, rivets, clips, or other suitable attachment devices. In the depicted examples, the mounting element **181** is provided as a screw.

The device interface **111** may comprise one or more mounting portions **112** for mounting at least one of the mounting members **120.**

To provide more flexibility and variety in mounting the mounting members **120,** the device interface **111** may comprise a plurality of mounting portions **112** for mounting at least one of the mounting members **120.**

The device interface **111** may comprise a first mounting portion **112A** for mounting one or more first mounting member **120.** Advantageously, the first mounting portion **112A** may be for mounting of one or more first mounting member **120** in a first orientation.

The device interface **111** may comprise a second mounting portion **112B** for mounting one or more second mounting member **120.** Advantageously, the second mounting portion **112B** may be for mounting of one or more second mounting member **120** in a second orientation.

To accommodate routing or connection of cables or tubes from different directions, the first and second orientation may differ.

Accordingly, the second orientation may be different from the first orientation such that the one or more second mounting member **120** extends at an angle relative to the one or more first mounting member **120.**

To further expand on the number of mounting options, the device interface **111** may comprise a third mounting portion **112C** for mounting one or more third mounting member **120.** Advantageously, the third mounting portion **112C** may be for mounting of one or more third mounting member **120** in a third orientation. The third orientation may be different from the first and second orientation such that the one or more third mounting member **120** extends at an angle relative to the one or more first and second mounting member **120.**

Extending at an angle may herein refer to first, second and/or third mounting member(s) **120** not extending parallel to each other and/or facing different directions. Notably, although referenced as first, second and third mounting members **120,** the mounting members **120** may have a similar shape and may be provided with similar or differing connection interfaces **121.** The terms first, second and third herein only refers to the mounting of the mounting member **120** to a particular mounting portion **112.** It is noted that any of the first, second and third mounting member(s) **120** may be mountable to any of the first, second and third mounting portions **112A-C.**

In the depicted example, the first mounting portion **112A** may be configured to accommodate mounting of the one or more first mounting elements **120** in a first orientation, wherein said first mounting element(s) **120** faces at least partially upwards. Hence, a surface of the mounting element **120** provided with the connection interface **121** may be in the first orientation. Advantageously, said surface may face at least partially upwards.

The first mounting portion **112** may be arranged at an upper portion of the main member **110.** The one or more first mounting elements **120** may be arranged vertically above the second and/or third mounting element(s) **120.**

In the depicted example, the connection interface **121** of the one or more first mounting member **120** faces in a diagonal upward direction to enable connection and/or routing of cabling or tubing from above.

In the depicted example, the second mounting portion **112B** may be configured to accommodate mounting of the one or more second mounting elements **120** in a second orientation, wherein said second mounting element(s) **120** faces at least partially horizontally and advantageously horizontally. Hence, a surface of the mounting element **120** provided with the connection interface **121** may be in the second orientation. Advantageously, said surface may face at least partially horizontally and preferably horizontally.

The second mounting portion **112B** may be arranged at an intermediate portion of the main member **110.** The one or more second mounting elements **120** may be arranged vertically below the first mounting element (s) and/or vertically above the third mounting element(s).

In the depicted example, the connection interface **121** of the one or more second mounting member **120** faces in a horizontal direction to enable connection and/or routing of cabling or tubing from in front of the device **100.**

In the depicted example, the third mounting portion **112C** may be configured to accommodate mounting of the one or more third mounting elements **120** in a third orientation, wherein said third mounting element(s) **120** faces at least partially downwards. Hence, a surface of the mounting element **120** provided with the connection interface **121** may be in the third orientation. Advantageously, said surface may face at least partially downwards.

The third mounting portion **112C** may be arranged at a lower portion of the main member **110.** The one or more third mounting elements **120** may be arranged vertically below the second and/or third mounting element(s) **120.**

In the depicted example, the connection interface **121** of the one or more third mounting member **120** faces in a diagonal downward direction to enable connection and/or routing of cabling or tubing from below.

The one or more mounting portions **112** may be configured to accommodate for mounting of a plurality of mounting members **120.** In the depicted example, the mounting portion **112** may be configured to releasably receive a plurality of mounting members **120** side by side along the mounting portion **112.**

Further referencing **FIG. 3A-B,** at least one of the one or more mounting portions **112** may comprise a mounting rail **113.** The mounting rail **113** may extend along the main member **110.** As will be explained in further detail later on, the at least one mounting member may comprise a rail engaging portion adapted to slidably engage the mounting rail **113** for positioning the mounting member **120** relative to the main member **110.**

The mounting rail **113** may be integrally formed. Hence, the main member **110** may be formed as a profile element with at least one mounting rail **113** extending along the profile element.

Advantageously, the mounting rail **113** may be configured to accommodate mounting of a plurality of mounting members along the mounting rail **113.**

To enable a releasable connection between the mounting member **120** and the main member **110,** the device **100** may further comprise a retention arrangement **140.** The retention arrangement **140** may be configured to form a releasable snap-fit connection between the mounting member **120** and the main member **110.** The retention arrangement **140** may comprise a retaining recess **141** provided on one of the mounting member **120** and the main member **110** and a retaining flange **142** provided on the other of the mounting member **120.** The retaining flange **142** may be configured to releasably engage the retaining recess **141** for retaining the mounting member **120** to the main member **110.**

As the skilled person is aware, a snap-fit connection may refer to a type of mechanical joint where components are connected by pressing them together until a locking feature engages, creating a secure and easily detachable connection. Hence, in this context, the retaining flange **142** may be configured deform upon being brought into engagement with the retaining recess **141.** Upon the retaining flange **142** being inserted through the retaining recess **141,** the resiliency of the retaining flange **142** causes the retaining flange **142** to engage the other side of the retaining recess **141,** effectively retaining the retaining flange **142** to the retaining recess **141.**

As shown in **FIG. 3A-B**,tthe retaining flange **142** may provided on the mounting member **120** while the retaining recess **141** may be provided on the main member **110.** It is however envisioned that the position of the retaining flange **142** and the retaining recess **141** are interchanged.

In some examples, a single retaining recess **141** may be used to retain a plurality of mounting members **120,** while in other examples, a single retaining recess **141** may be adapted to retain only one mounting member **120.** In the depicted example, a plurality of retaining recesses **141** are provided, with each retaining recess **141** being adapted to retain one mounting member **120,** e.g. the retaining flange of one mounting member **120.**

According to the depicted example, the one or more retaining recesses **141** may each be provided as an elongated recess extending along the main member **110.**

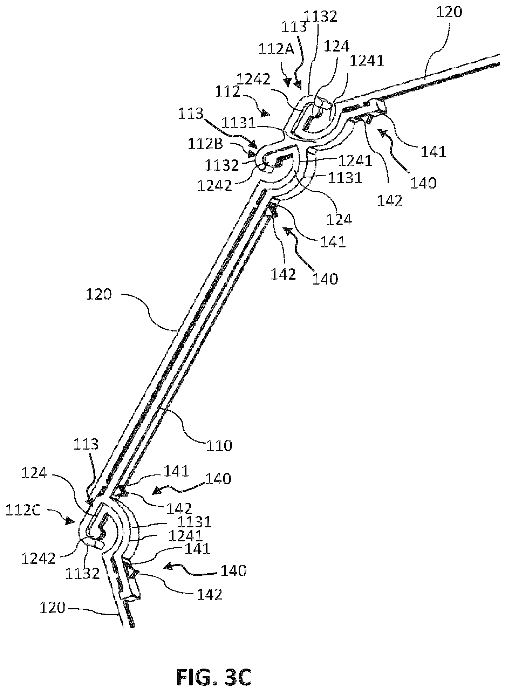

**FIG. 3C** depicts the engagement between main member **110** and the mounting members **120** depicted in **FIG. 3A-B** in further detail.

The at least one mounting member **120,** e.g. at least one of the one or more mounting members **120,** may comprise a rail engaging portion **124.** The rail engaging portion **124** may be adapted to slidably engage the mounting rail **113** for positioning the mounting member **120** relative to the main member **110.**

Referencing **FIG. 3C****,** the slidable engagement between the rail engaging portion **124** and the mounting rail **113** may be configured to accommodate for pivoting of the mounting member **120** relative the mounting rail **113** such that the mounting member **120** is pivotable to a position, e.g. a retaining position. In the position, the retaining recess **141** and the retaining flange **142** are brought into engagement for retaining the mounting member **120** to the main member **110.**

The rail engaging portion **124** may extend along a side of the mounting member **120.** The rail engaging portion **124.** The mounting member **120** may be pivotable about an axis extending along the mounting rail **113.**

As the skilled person recognizes the pivotable engagement between the rail engaging portion **124** and the mounting rail **113** may be achieved in a plurality of ways. According to the depicted example, the rail engaging portion **124** may comprise a curved surface **1241** extending along the rail engaging portion **124.** The mounting rail **113** may comprise a corresponding curved surface **1131** extending along the mounting rail **113** such that the curved surface **1241** of the rail engaging portion **124** and curved surface **1131** of the mounting rail **113** may be in slidable engagement to guide the pivoting of the rail engaging portion **124** relative to the mounting rail **113.**

Further referencing **FIG. 3C****,** the rail engaging portion **124** may comprise a stop protrusion **1242** and the mounting rail **113** may comprise a stop portion **1132.** The stop protrusion **1242** and the mounting rail **113** may be configured to engage upon pivoting of the mounting member **120** to the retaining position. Thereby, a more robust snap-fit connection may be achieved.

According to the depicted example, the at least one first and the at least one third mounting member **120** may be mounted to the main member **110** in the same manner. To mount the mounting member **120,** the mounting member **120** may be slid onto the mounting rail **113.** Upon alignment between the retaining flange **142** and the retaining recess **141,** the mounting member **120** may be pivoted towards the main member **110** to the retaining position.

According to the depicted example, the at least one second mounting member **120** may utilize two retaining arrangements for forming the snap-fit connection to the main member **110.** Thus, the at least one second mounting member **120** may comprise two retaining flanges **142** each being configured to engage a corresponding retaining recess **141** of the main member **110** upon the mounting member **120** being pivoted to the retaining position.

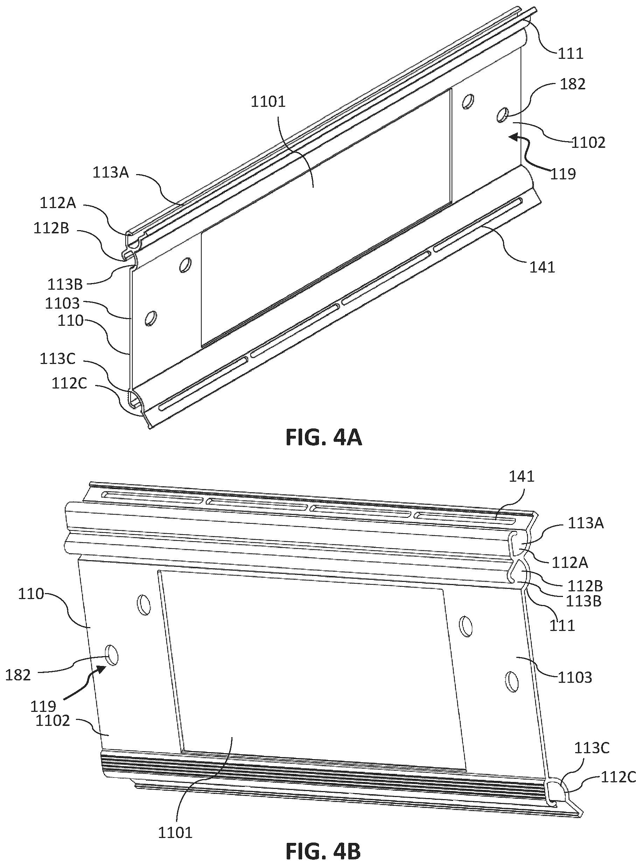

**FIG. 4A-B** depicts the main member **110** in further detail according to an example.

According to the depicted example, the main member **110** may comprise a through-going main member aperture **1101.** The main member aperture **1101** may be for enabling routing or connection of cabling or tubing through the device **100.** The mounting interface **111** may be configured to accommodate for mounting of at least one mounting member **120** such that said at least one mounting member **120** extends across the main member aperture **1101.** According to one example, the at least one second mounting member **120** may be arranged such that said mounting member **120** extends across the main member aperture **1101.**

Further referencing **FIG. 4A-B,** the main member **110** may comprise a first end portion **1102** and a second end portion **1103.** The first end portion **1102** and the second end portion **1103** may be arranged on opposite sides of the main member aperture **1101.** The first end portion **1102** and the second end portion **1103** may be interconnected by means of the one or more mounting portion **12A-C.** In the depicted example, the first and second mounting portion **12A-B** are arranged along an upper side of the main member **110** above the main member aperture **1101** and the third mounting portion **12C** may be arranged along a lower side of the main member **110** below the main member aperture **1101.**

In the depicted example, the mounting interface **119** may be provided on the first end portion **1102** and the second end portion **1103.** Thus, both the first end portion **1102** and the second end portion **1103** may be provided with mounting apertures **182** for receiving mounting elements **181** for mounting the device **100** and preferably for mounting the device 100 to the support member **11.**

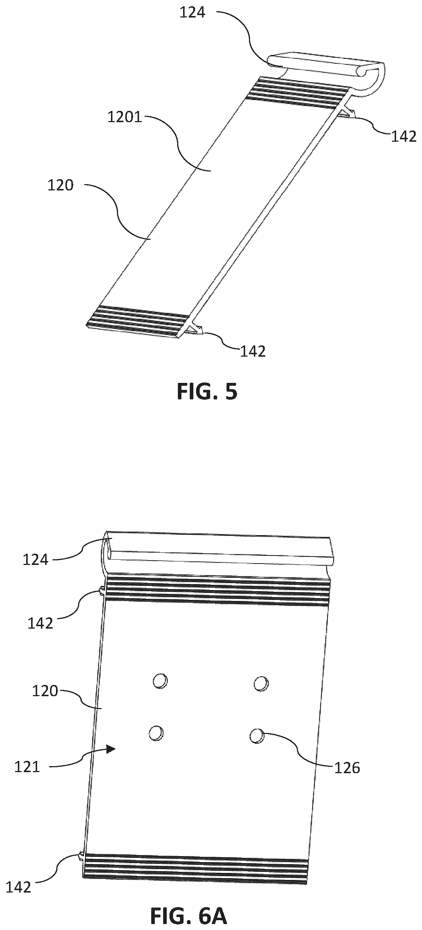

**FIG. 5** depicts a mounting member **120.** As shown in **FIG. 5****,** the mounting member **120** is depicted without any connection interface **121.** Instead, the mounting interface **121** may be provided by machining of the mounting member **120,** e.g. the surface **1201** of the mounting member **120.**

Thus, the connection interface **121** may be provided by forming suitable recesses or indentations in the mounting member **120.** For example, the connection interface **121** may be provided by means of drilling of holes through the mounting member **120.** It may however also be envisioned that the connection interface **121** can be achieved through various methods, such as drilling, machining, molding, or 3D printing. Suitable production methods for the mounting member **120** with the connection interface **121** may include injection molding, machining from stock material, extrusion or additive manufacturing (3D printing). The choice of production method will depend on the desired complexity, material properties, and production volume.

**FIG. 6A-E** depict examples of mounting members **120** adapted for different implementations and use of tubing or cabling.

**FIG. 6A** depicts a mounting member **120** adapted for mounting of mounting clips. The connection interface **121** may comprise one or more clip mounting portions **126** for mounting of a mounting clip for routing of one or more cable or tube. These clip mounting portions **126** may provide dedicated locations for attaching mounting clips that secure the cable or tube to the mounting member **120.** By using mounting clips, the cable or tube can be easily routed and secured along the mounting member **120,** preventing it from dangling or interfering with other components.

The mounting clips can be made of a variety of materials, such as plastic, metal, or rubber, depending on the specific application and environmental conditions. The clip mounting portions **126** may be holes, slots, or other features that are specifically designed to accommodate mounting of the mounting clips. In some examples, the mounting clips may be releasably mountable to the connection interface **121,** allowing for easy removal and rerouting of the cables or tubes. In the depicted example, at least one of the one or more clip mounting portions **126** may be provided as a hole extending through the mounting member **120.** In the depicted example, the hole is adapted to receive a mounting clip fastening member for attaching the mounting clip.

Typically, the mounting clip may comprise a mounting portion and a claw portion for example in the form a U-shaped element for gripping one or more tube or cable.

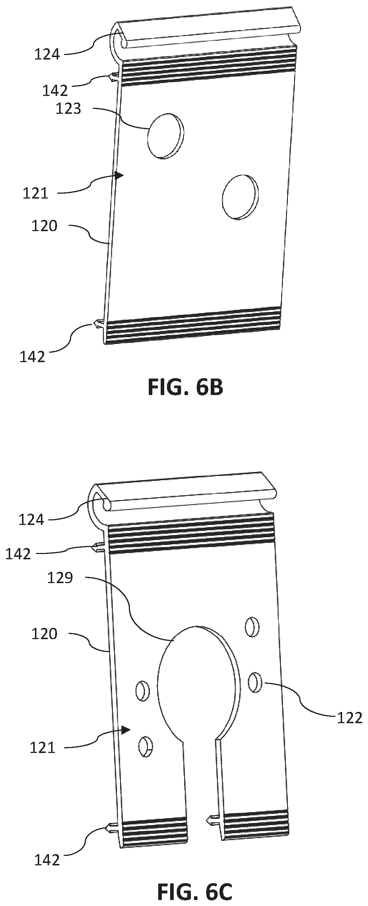

**FIG. 6B** depicts a mounting member **120** particularly adapted for passage of cabling or tubing. The connection interface **121** may comprise one or more routing apertures **123** for routing at least one cable or tube to the vehicle 1 through the mounting member **120.**

Thus, the cabling or tubing may be routed directly through the routing aperture **123** in the mounting element **120,** providing a clean and organized connection. The device **100** and the mounting member **120** may provide structural support to the cabling or tubing that is routed through the mounting element **120,** reducing stress on the connection points and preventing damage to the cabling or tubing. The routing apertures **123** may be sized and shaped to accommodate different cable and tube diameters, and they may be lined with a protective material to prevent abrasion or chafing. Further, the routing apertures **123** may allow for tucking away of cabling or tubing to avoid unnecessary exposure or entangling.

**FIG. 6C-E** depict examples where the connection interface **121** is configured to be an interface for mounting of a connector.

The connection interface **121** may comprise one or more connector mounting portions **122** for mounting of a tube connector or a cable connector. For simplicity, both types are hereinafter referenced as connectors.

The connector mounting portions **122** may provide an interface for attaching the connector. The connector may be any type of connector suitable for cabling or tubing, such as an electrical connector, a pneumatic connector, or a hydraulic connector.

When cables or tubes are routed through the mounting element, the device **100** and the mounting member **120** may provide structural support to the cabling or tubing, which may prevent damage to the cabling or connector and may keep the cabling or tubing securely connected to the connector.

In the depicted example, the one or more tube or connector mounting portion **122** may provided as one or more connector fastener hole provided in the mounting member **120.** The one or more connector fastener hole may be configured to receive a connector mounting member for mounting of the connector.

To allow for cabling and tubing to be mounted to the connector from both sides of the mounting element **120,** the mounting element **120** may be further provided with a connector mounting aperture **129.** The connector may be mounted in the connector mounting aperture such that cabling or tubing may extend through the connector. Depending on the type of connector to be mounted to the connection interface **121,** the shape of the connector mounting aperture **129** may differ.

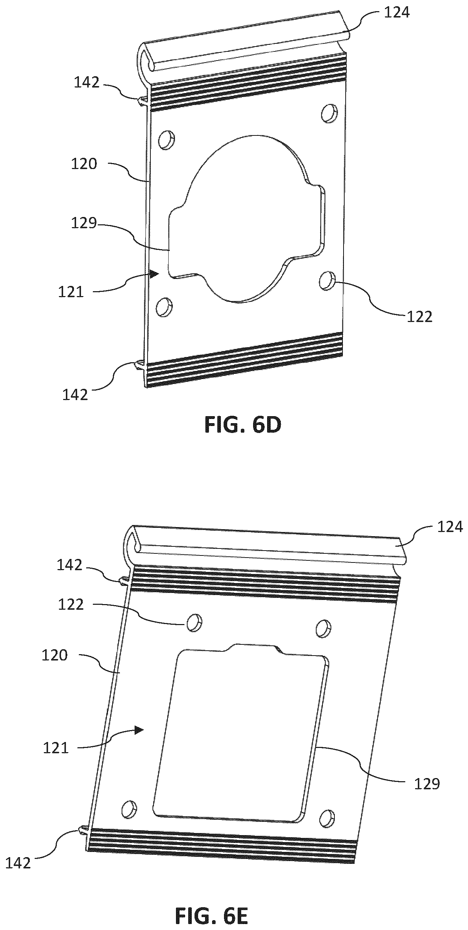

**FIG. 6C** depicts a connector mounting aperture **129** with a substantially circular aperture portion interconnected with an aperture portion formed as an elongated slot. **FIG. 6D** depicts a connector mounting aperture **129** with a substantially circular shape provided with squared portions. **FIG. 6E** depicts a substantially rectangular connector mounting aperture **129** with a tab for clearance.

As is evident to the skilled person the shape of connector mounting aperture **129** may be adapted to accommodate any type of conventional connector suitable for connecting tubing or cabling.

According to an aspect a device, an interface system and a vehicle according to any of the following examples may be provided.

Example 1: A device (100) for providing an interface for connecting at least one of cabling or tubing to a vehicle (1), the device (100) comprising: a main member (110) comprising a device interface (111), one or more mounting member (120) releasably mounted to the device interface (111), wherein at least one mounting member (120) comprises a connection interface (121) for accommodating connection of at least one cable or tube to the vehicle (1), and wherein the device interface (111) is configured to modularly receive a plurality of mounting members (120).

Example 2: The device (100) of example 1, wherein at least one mounting member (120) of the one or more mounting member (120) is provided as a plate member.

Example 3: The device (100) of example 1 or 2, wherein at least one mounting member (120) of the one or more mounting member (120) is formed by extrusion.

Example 4: The device (100) of any of examples 1-3, wherein the main member (110) comprises a mounting interface (119) comprising one or more mounting apertures (182) for receiving a mounting element (181) for mounting the device (100) to the vehicle (1).

Example 5: The device (100) of any of examples 1-4, wherein the connection interface (121) comprises one or more routing apertures (123) for routing at least one cable or tube to the vehicle (1) through the mounting member (120).

Example 6: The device (100) of any of examples 1-5, wherein the connection interface (121) comprises one or more clip mounting portions (126) for mounting of a mounting clip for routing of one or more cable or tube or connector mounting portions (122) for mounting of a tube connector or a cable connector.

Example 7: The device (100) of example 6, wherein at least one of the one or more clip mounting portions (126) is provided as a hole extending through the mounting member (120).

Example 8: The device (100) of any of examples 1-7, wherein the main member (110) is formed by a profile element.

Example 9: The device (100) of any of examples 1-8, wherein the main member (110) is formed by extrusion.

Example 10: The device (100) of any of examples 1-9, wherein the device interface (111) comprises one or more mounting portion (112) for mounting at least one of the mounting members (120).

Example 11: The device (100) of example 10, wherein the device interface (111) comprises a first mounting portion (112A) for mounting one or more first mounting member (120) in a first orientation and a second mounting portion (112B) for mounting one or more second mounting member (120) in a second orientation different from the first orientation such that the one or more second mounting member (120) extends at an angle relative to the one or more first mounting member (120).

Example 12: The device of example 11, wherein the device interface (111) comprises a third mounting portion (112C) for mounting one or more third mounting member (120) in a third orientation different from the first and second orientation such that the one or more third mounting member (120) extends at an angle relative to the one or more first and second mounting member (120).

Example 13: The device (100) of any of examples 1-12, wherein at least one of one or more mounting portions (112) comprises a mounting rail (113) extending along the main member (110), and wherein the at least one mounting member (120) comprises a rail engaging portion (124) adapted to slidably engage the mounting rail (113) for positioning the mounting member (120) relative to the main member (110).

Example 14: The device (100) of example 13, wherein the at least one mounting rail (113) is configured to accommodate mounting of a plurality of mounting members (120) along said mounting rail (113).

Example 15: The device (100) of any of examples 1-14, further comprising a retention arrangement (140) configured to form a releasable snap-fit connection between the mounting member (120) and the main member (110), the retention arrangement (140) comprising a retaining recess (141) provided on one of the mounting member (120) and the main member (110) and a retaining flange (142) provided on the other of the mounting member (120) and configured to releasably engage the retaining recess (141) for retaining the mounting member (120) to the main member (110).

Example 16: The device (100) of example 15 when dependent on example 13 or 14, wherein the slidable engagement between the rail engaging portion (124) and the mounting rail (113) is configured to accommodate for pivoting of the mounting member (120) relative the mounting rail (113) such that the mounting member (120) is pivotable to a position where the retaining recess (141) and the retaining flange (142) are brought into engagement for retaining the mounting member (120) to the main member (110).

Example 17: The device (100) of example 1, wherein the main member (110) is formed by a profile element, wherein the device interface (111) comprises a first mounting portion (112A) for mounting one or more first mounting member (120) in a first orientation and a second mounting portion (112B) for mounting one or more second mounting member (120) in a second orientation different from the first orientation such that the one or more second mounting member (120) extends at an angle relative to the one or more first mounting member (120), wherein the device interface (111) further comprises a third mounting portion (II2C) for mounting one or more third mounting member (120) in a third orientation different from the first and second orientation such that the one or more third mounting member (120) extends at an angle relative to the one or more first and second mounting member (120), wherein each of the mounting portions (112) comprises a mounting rail (113) extending along the main member (110), and wherein each mounting member (120) comprises a rail engaging portion (124) adapted to slidably engage the mounting rail (113) for positioning the mounting member (120) relative to the main member (110), and wherein each mounting rail (113) is configured to accommodate mounting of a plurality mounting members (120) along said mounting rail (113).

Example 18: An interface system (10) for a vehicle (1), the interface system (10) comprising a device (100) of any of examples 1-17 and a support member (11) for mounting the device (100) to a frame (12) of the vehicle (1).

Example 19: The interface system (10) of example 18, wherein the support member (11) is substantially arc-shaped.

Example 20: A vehicle (1) comprising the interface system (10) of any of examples 18-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A device (100) for providing an interface for connecting at least one of cabling or tubing to a vehicle (1), the device (100) comprising:
- a main member (110) comprising a device interface (111), and
- one or more mounting member (120) releasably mounted to the device interface (111),
wherein at least one mounting member (120) comprises a connection interface (121) for accommodating connection of at least one cable or tube to the vehicle (1), and wherein the device interface (111) is configured to modularly receive a plurality of mounting members (120).

2. The device (100) of claim 1, wherein at least one mounting member (120) of the one or more mounting member (120) is provided as a plate member.

3. The device (100) of claim 1 or 2, wherein the connection interface (121) comprises one or more routing apertures (123) for routing at least one cable or tube to the vehicle (1) through the mounting member (120).

4. The device (100) of any of claims 1-3, wherein the connection interface (121) comprises one or more clip mounting portions (126) for mounting of a mounting clip for routing of one or more cable or tube or connector mounting portions (122) for mounting of a tube connector or a cable connector.

5. The device (100) of claim 4, wherein the main member (110) is formed by a profile element.

6. The device (100) of any of claims 1-5, wherein the device interface (111) comprises one or more mounting portion (112) for mounting at least one of the mounting members (120).

7. The device (100) of claim 6, wherein the device interface (111) comprises a first mounting portion (112A) for mounting one or more first mounting member (120) in a first orientation and a second mounting portion (112B) for mounting one or more second mounting member (120) in a second orientation different from the first orientation such that the one or more second mounting member (120) extends at an angle relative to the one or more first mounting member (120).

8. The device of claim 7, wherein the device interface (111) comprises a third mounting portion (112C) for mounting one or more third mounting member (120) in a third orientation different from the first and second orientation such that the one or more third mounting member (120) extends at an angle relative to the one or more first and second mounting member (120).

9. The device (100) of any of claims 1-8, wherein at least one of one or more mounting portions (112) comprises a mounting rail (113) extending along the main member (110), and wherein the at least one mounting member (120) comprises a rail engaging portion (124) adapted to slidably engage the mounting rail (113) for positioning the mounting member (120) relative to the main member (110).

10. The device (100) of claim 9, wherein the at least one mounting rail (113) is configured to accommodate mounting of a plurality of mounting members (120) along said mounting rail (113).

11. The device (100) of any of claims 1-10, further comprising a retention arrangement (140) configured to form a releasable snap-fit connection between the mounting member (120) and the main member (110), the retention arrangement (140) comprising a retaining recess (141) provided on one of the mounting member (120) and the main member (110) and a retaining flange (142) provided on the other of the mounting member (120) and configured to releasably engage the retaining recess (141) for retaining the mounting member (120) to the main member (110).

12. The device (100) of claim 11 when dependent on claim 9 or 10, wherein the slidable engagement between the rail engaging portion (124) and the mounting rail (113) is configured to accommodate for pivoting of the mounting member (120) relative the mounting rail (113) such that the mounting member (120) is pivotable to a position where the retaining recess (141) and the retaining flange (142) are brought into engagement for retaining the mounting member (120) to the main member (110).

13. The device (100) of claim 1, wherein the main member (110) is formed by a profile element, wherein the device interface (111) comprises a first mounting portion (112A) for mounting one or more first mounting member (120) in a first orientation and a second mounting portion (112B) for mounting one or more second mounting member (120) in a second orientation different from the first orientation such that the one or more second mounting member (120) extends at an angle relative to the one or more first mounting member (120),
wherein the device interface (111) further comprises a third mounting portion (112C) for mounting one or more third mounting member (120) in a third orientation different from the first and second orientation such that the one or more third mounting member (120) extends at an angle relative to the one or more first and second mounting member (120),
wherein each of the mounting portions (112) comprises a mounting rail (113) extending along the main member (110), and wherein each mounting member (120) comprises a rail engaging portion (124) adapted to slidably engage the mounting rail (113) for positioning the mounting member (120) relative to the main member (110), and
wherein each mounting rail (113) is configured to accommodate mounting of a plurality mounting members (120) along said mounting rail (113).

14. An interface system (10) for a vehicle (1), the interface system (10) comprising a device (100) of any of claims 1-13 and a support member (11) for mounting the device (100) to a frame (12) of the vehicle (1).

15. A vehicle (1) comprising the interface system (10) of claim 14.
